# EUROPEAN PATENT APPLICATION

(11) **EP 4 787 441 A1**
(43) Date of publication of application: **05.08.2026**
(21) Application number: 26153030.7
(22) Date of filing: 20.01.2026
(51) Int. Cl.: H01M 4/04, H01M 4/13, H01M 4/62, H01M 4/66, H01M 4/70

(54) **ELECTRODE CURRENT COLLECTOR AND ELECTRODE INCLUDING THE SAME**

(30) Priority: 20.01.2025 KR 20250008003
(71) Applicant: SK On Co., Ltd., Seoul 03161 (KR)
(72) Inventor: KIM, Jang Goon, 34124 Daejeon (KR); KANG, Byung Chan, 34124 Daejeon (KR); SONG, Jung Hwan, 34124 Daejeon (KR); YU, Gyeong Hwa, 34124 Daejeon (KR); YIM, Hyung Joo, 34124 Daejeon (KR); HEO, Kyun, 34124 Daejeon (KR)
(74) Representative: Stolmár & Partner Patentanwälte PartG mbB

(57) **Abstract**

The present disclosure relates to an electrode current collector comprising an electrode sheet including an electrically conductive material, a first pattern portion protruding or recessed in a stacking region provided on at least one surface of the electrode sheet, and a second pattern portion protruding or recessed from the first pattern portion, and to an electrode including the same, wherein an average surface roughness of the electrode sheet in the stacking region is greater than 0.2 µm.

## Description

### BACKGROUND OF THE INVENTION

### 1. Field

The present disclosure relates to an electrode current collector and an electrode including the same. More particularly, the present disclosure relates to an electrode current collector having improved manufacturing efficiency and performance, and an electrode including the same.

### 2. Description of the Related Art

Conventionally, an electrode for a battery (secondary battery) includes a metal electrode current collector and an active material layer coated on the current collector. The active material layer includes an active material, a conductive material, and a binder. For example, an active material layer of a conventional negative electrode for a battery includes a negative electrode active material, a conductive material, and an SBR (Styrene-Butadiene-Rubber) binder.

Recently, in order to improve rapid charging performance of batteries, research has been conducted to reduce a content of the binder. When the content of the binder increases, adhesion between the active material layer and the electrode current collector is improved, but the binder interferes with movement of electrons, thereby causing an increase in resistance of the electrode for the battery, and consequently decreasing rapid charging performance of the battery. On the other hand, when the content of the binder decreases, adhesion between the active material layer and the electrode current collector weakens, and detachment of the active material may occur. If the detachment of the active material occurs during manufacturing of the electrode for the battery, contamination may occur in the manufacturing process of the electrode for the battery, and if the detachment of the active material occurs in a post-process of the battery, it may cause performance degradation or an internal short-circuit of the battery.

### SUMMARY OF THE INVENTION

According to one aspect of the present disclosure, an object is to improve performance of a battery cell.

According to another aspect of the present disclosure, an object is to improve manufacturing efficiency of a battery cell.

According to still another aspect of the present disclosure, an object is to enhance lifetime of a battery cell.

According to still another aspect of the present disclosure, an object is to increase a surface area of an electrode current collector.

According to still another aspect of the present disclosure, an object is to reduce a content of a binder of an active material layer.

Meanwhile, a battery cell including the electrode current collector and an electrode including the same of the present disclosure may be widely applied in green technology fields such as electric vehicles, battery charging stations, and solar power generation and wind power generation using batteries. In addition, the battery cell including the electrode current collector and an electrode including the same may be used in eco-friendly electric vehicles and hybrid vehicles to suppress air pollution and greenhouse gas emissions to prevent climate change.

As a technical means to achieve the technical objects, an electrode current collector according to the present disclosure may include an electrode sheet including an electrically conductive material; a first pattern portion protruding or recessed in a stacking region provided on at least one surface of the electrode sheet; and a second pattern portion protruding or recessed from the first pattern portion, wherein an average surface roughness of the electrode sheet in the stacking region may be greater than 0.2 µm.

In one embodiment, the first pattern portion may include a plurality of grooves recessed from the one surface of the electrode sheet to form recessed spaces, and the second pattern portion may protrude from each inner surface of the plurality of grooves.

In one embodiment, each depth of the plurality of grooves may be greater than a protruding length of the second pattern portion.

In one embodiment, the plurality of grooves may be arranged at predetermined intervals.

In one embodiment, the plurality of grooves may respectively extend in a predetermined direction and may be arranged side by side along the intervals.

In one embodiment, the first pattern portion may be provided such that the one surface of the electrode sheet has a wavy form, and the second pattern portion may protrude from at least one valley of the first pattern portion such that a surface of the second pattern portion has a wavy form.

In one embodiment, a length from the other surface of the electrode sheet to any crest of the first pattern portion may be greater than a length to any crest of the second pattern portion.

In one embodiment, shapes of the plurality of grooves may be respectively provided as polygonal or circular.

In one embodiment, the plurality of grooves provided as the polygonal or the circular may be arranged at predetermined intervals from each other.

In one embodiment, the first pattern portion may include a plurality of protrusions formed to protrude from the one surface of the electrode sheet, and the second pattern portion may protrude from the plurality of protrusions.

In one embodiment, a protruding length of any one of the plurality of protrusions from the one surface of the electrode sheet may be greater than a length of the second pattern portion protruding from the first pattern portion.

In one embodiment, an average surface roughness of the second pattern portion may be different from an average surface roughness of the electrode sheet in the stacking region.

As a technical means to achieve the technical objects, an electrode according to the present disclosure may include an electrode sheet including an electrically conductive material; a first pattern portion protruding or recessed in a stacking region provided on at least one surface of the one surface of the electrode sheet; a second pattern portion protruding or recessed from the first pattern portion; and an active material layer including a binder and an active material and being stacked in the stacking region, wherein an average surface roughness of the electrode sheet in the stacking region may be greater than 0.2 µm.

In one embodiment, a content of the binder based on a total weight of solids of the active material layer may be 1% or more and less than 1.5%.

In one embodiment, the electrode sheet may include copper, and the active material may be a negative electrode active material.

According to one embodiment of the present disclosure, performance of a battery cell may be improved.

According to another embodiment of the present disclosure, manufacturing efficiency of a battery cell may be improved.

According to still another embodiment of the present disclosure, lifetime of a battery cell may be enhanced.

According to still another embodiment of the present disclosure, a surface area of an electrode current collector may be increased.

According to still another embodiment of the present disclosure, a content of a binder of an active material layer may be reduced.

### BRIEF DESCRIPTION OF THE DRAWINGS

FIG. 1 is an example of a battery cell including an electrode according to the present disclosure.
FIG. 2 schematically illustrates an electrode according to the present disclosure.
FIG. 3 is a cross-sectional view of an example of an electrode current collector according to the present disclosure.
FIG. 4 illustrates an example of an electrode current collector according to the present disclosure.
FIG. 5 illustrates another example of an electrode current collector according to the present disclosure.
FIG. 6 illustrates still another example of an electrode current collector according to the present disclosure.
FIG. 7 is a cross-sectional view of still another example of an electrode current collector according to the present disclosure.
FIG. 8 is a cross-sectional view of still another example of an electrode current collector according to the present disclosure.

### DETAILED DESCRIPTION

Hereinafter, the present disclosure will be described in detail with reference to the accompanying drawings. However, this is merely illustrative, and the present disclosure is not limited to the specific embodiments described by way of example.

In the present specification, the terms battery, secondary battery, and cell all refer equally to a battery cell capable of charging and discharging.

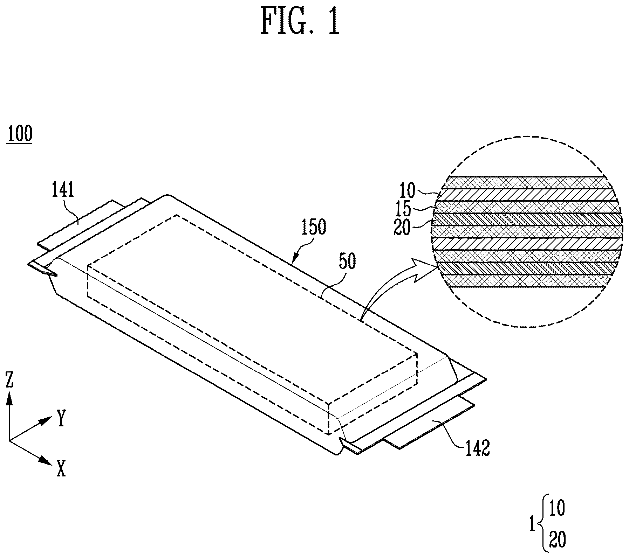

FIG. 1 is an example of a battery cell including an electrode according to the present disclosure.

Referring to FIG. 1, the battery cell 100 may include a cell case 150 accommodating an electrode assembly 50 therein, and a first terminal portion 141 and a second terminal portion 142 that are electrically connected to the electrode assembly 50 and protrude to the outside of the cell case 150.

The first terminal portion 141 and the second terminal portion 142 may have different polarities.

The electrode assembly 50 may include a first electrode 10 and a second electrode 20 on which active materials are stacked, and a separator 15 disposed between the first electrode 10 and the second electrode 20. The first electrode 10 may have one polarity among a positive electrode and a negative electrode, and the second electrode 20 may have the other polarity. The separator 15 may be disposed between the first electrode 10 and the second electrode 20.

The first electrode 10, the second electrode 20, and the separator 15 disposed between the first electrode 10 and the second electrode 20 may be stacked along a predetermined stacking direction (Z direction).

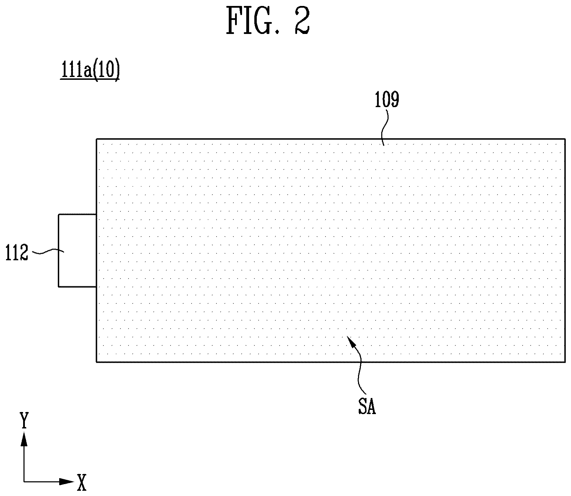

FIG. 2 schematically illustrates an electrode according to the present disclosure.

The first electrode 10 may include a negative electrode active material and an electrode current collector 111 on which the negative electrode active material is stacked, and the second electrode 20 may include a positive electrode active material and an electrode current collector 111 on which the positive electrode active material is stacked. In addition, in the present disclosure, the term electrode 1 refers to either the first electrode 10 or the second electrode 20, and unless otherwise specified, the description of the electrode 1 may be equally applied to the first electrode 10 and the second electrode 20.

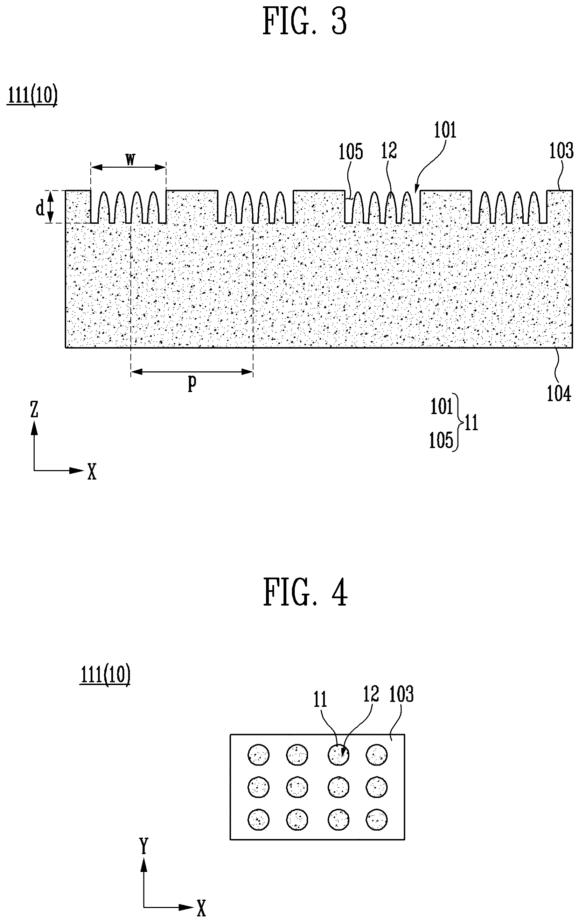

The electrode 1 according to the present disclosure may include an electrode sheet 111a including an electrically conductive material, and an active material layer stacked in a stacking region SA (see FIG. 2) among one surface 103 (see FIG. 3) of the electrode sheet 111a and including a binder and an active material.

The electrode sheet 111a may be a thin foil or plate. The electrode sheet 111a may include a conductive material such as copper or aluminum.

For example, the first electrode 10 may include an electrode sheet 111a including copper and a negative electrode active material, and the second electrode 20 may include an electrode sheet 111a including aluminum and a positive electrode active material.

The electrode sheet 111a may include a first part 109 having a plate shape and a second part 112 protruding from one edge of the first part 109. The first part 109 may include the stacking region SA in which the active material layer is stacked.

Conversely, the second part 112 may be a region where the electrode sheet 111a is exposed as it is. The second part 112 may be referred to as a bare electrode sheet. The second part 112 may be a path electrically connecting the first part 109 to one of the first terminal portion 141 and the second terminal portion 142.

The active material layer may include an active material, a conductive material, and a binder, and may be stacked in the stacking region SA. The active material layer may be adhered to the electrode sheet 111a by the binder.

The active material layer may also be formed on both surfaces of the electrode sheet 111a.

The active material may be either a positive electrode active material or a negative electrode active material.

The positive electrode active material may include a lithium-nickel metal oxide. The lithium-nickel metal oxide may further include at least one of cobalt (Co), manganese (Mn), and aluminum (Al).

Alternatively, the positive electrode active material may include a lithium-iron phosphate.

The positive electrode active material may further include a coating element or a doping element. For example, elements that are substantially the same as or similar to the above-mentioned auxiliary elements may be used as the coating element or the doping element. For example, one alone or a combination of two or more of the above-mentioned elements may be used as the coating element or the doping element.

The coating element or the doping element may be present on a surface of lithium-nickel metal oxide particles or may penetrate through the surface of lithium-nickel composite metal oxide particles to be included in a bonding structure.

The positive electrode active material may include a nickel-cobalt-manganese (NCM)-based lithium oxide. In this case, an NCM-based lithium oxide having an increased content of nickel may be used.

Ni may be provided as a transition metal associated with output and capacity of a lithium secondary battery. Accordingly, by adopting a high-Ni composition in the positive electrode active material as described above, a high-capacity positive electrode and a high-capacity lithium secondary battery may be provided.

However, as the content of Ni increases, long-term storage stability and lifespan stability of the positive electrode or the secondary battery may be relatively reduced, and side reactions with the electrolyte may also increase. However, according to exemplary embodiments, by including Co, electrical conductivity may be maintained, and through Mn, lifespan stability and capacity retention characteristics may be improved.

A content of Ni in the NCM-based lithium oxide (for example, a mole fraction of nickel among a total number of moles of nickel, cobalt, and manganese) may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the positive electrode active material may further include a lithium cobalt oxide-based active material, a lithium manganese oxide-based active material, a lithium nickel oxide-based active material, or a lithium iron phosphate (LFP) active material (for example, LiFePO₄).

The positive electrode active material may further include a positive electrode binder and a conductive material. In addition, if necessary, the positive electrode active material may further include a thickener. For example, the positive electrode binder may be any one or a combination of polyvinylidene fluoride (PVDF), poly(vinylidene fluoride-co-hexafluoropropylene), polyacrylonitrile, polymethylmethacrylate, and butadiene rubber. Also, for example, the positive electrode binder may use a PVDF-based binder.

The conductive material may be added to improve conductivity of the active material and/or mobility of lithium ions or electrons. For example, the conductive material may include carbon-based conductive materials such as graphite, carbon black, acetylene black, Ketjen black, graphene, carbon nanotubes (CNTs), VGCF (vapor-grown carbon fiber), or carbon fibers, and/or metal-based conductive materials including perovskite materials such as tin, tin oxide, titanium oxide, LaSrCoO₃, or LaSrMnO₃, but is not limited thereto.

If necessary, the positive electrode active material may further include a thickener and/or a dispersant. For example, the positive electrode active material may include a thickener such as carboxymethyl cellulose (CMC).

Meanwhile, the negative electrode active material may be a material capable of adsorbing and desorbing lithium ions. For example, the negative electrode active material may include carbon-based materials such as crystalline carbon, amorphous carbon, carbon composites, or carbon fibers; lithium metal; lithium alloys; silicon (Si)-containing materials; or tin (Sn)-containing materials.

For example, the amorphous carbon may be any one or a combination of hard carbon, soft carbon, coke, mesocarbon microbeads (MCMB), and mesophase pitch-based carbon fiber (MPCF).

For example, the crystalline carbon may be any one or a combination of natural graphite, artificial graphite, graphitized coke, graphitized MCMB, and graphitized MPCF.

The lithium metal may be pure lithium metal or lithium metal having a protective layer formed thereon to suppress dendrite growth. In one embodiment, a lithium metal-containing layer deposited or coated on the electrode sheet 111a may be used as the negative electrode active material. That is, a lithium thin film layer may be used as the negative electrode active material.

Elements included in the lithium alloy may be any one or a combination of aluminum, zinc, bismuth, cadmium, antimony, silicon, lead, tin, gallium, or indium.

The silicon-containing material may provide improved capacity characteristics. For example, the silicon-containing material may be any one or a combination of Si, SiOx (0 < x < 2), metal-doped SiOx (0 < x < 2), and silicon-carbon composites. The metal may include lithium and/or magnesium, and the metal-doped SiOx (0 < x < 2) may include a metal silicate.

For example, the solvent for the negative electrode active material may be any one or a combination of water, purified water, deionized water, distilled water, ethanol, isopropanol, methanol, acetone, n-propanol, and t-butanol.

In addition, the negative electrode active material may further include a binder and may optionally further include a conductive material, a thickener, and the like.

In some embodiments, the binder may be a styrene-butadiene rubber (SBR)-based binder, carboxymethyl cellulose (CMC), a polyacrylic acid-based binder, or a poly(3,4-ethylenedioxythiophene) (PEDOT)-based binder.

The conductive material may be added to improve conductivity of the negative electrode active material and/or mobility of lithium ions or electrons. For example, the conductive material may include carbon-based conductive materials such as graphite, carbon black, acetylene black, Ketjen black, graphene, carbon nanotubes, VGCF (vapor-grown carbon fiber), and carbon fibers, and/or metal-based conductive materials including perovskite materials such as tin, tin oxide, titanium oxide, LaSrCoO₃, and LaSrMnO₃, but is not limited thereto.

Also, for example, the thickener may be carboxymethyl cellulose (CMC).

The positive electrode active material may be prepared in a slurry form by mixing the above-described materials and may then be coated on the electrode current collector 111. Likewise, the negative electrode active material may be prepared in a slurry form by mixing the above-described materials and may then be coated on the electrode current collector 111. Thereafter, through a drying process, the solvent evaporates from the active material layer, and solids of the negative electrode active material or solids of the positive electrode active material may form the active material layer.

FIG. 3 is a cross-sectional view of an example of an electrode current collector according to the present disclosure.

The electrode current collector 111 according to the present disclosure may include an electrode sheet 111a including an electrically conductive material; a first pattern portion 11 protruding or recessed in a stacking region SA (see FIG. 2) among one surface 103 of the electrode sheet 111a; and a second pattern portion 12 protruding or recessed from the first pattern portion 11, and an average surface roughness of the electrode sheet 111a in the stacking region SA may be greater than 0.2 µm.

The electrode sheet 111a may include a conductive material and may serve as a pathway for movement of electrons. For example, the electrode sheet 111a may include aluminum or copper. For example, a thickness of the electrode sheet 111a or a thickness of the electrode current collector 111 may be 6 µm or more and 12 µm or less.

The first pattern portion 11 may be formed on at least one surface among both surfaces of the electrode sheet 111a. The first pattern portion 11 and the second pattern portion 12 may increase a surface area of the one surface 103 of the electrode sheet 111a to enhance adhesion of the active material layer and reduce resistance at a boundary between the active material layer and the electrode sheet 111a.

To this end, the first pattern portion 11 may include a plurality of grooves 101 recessed from the one surface 103 of the electrode sheet 111a to form recessed spaces 105, and the second pattern portion 12 may protrude from each inner surface of the plurality of grooves 101.

The recessed space 105 may be formed by the one surface 103 of the electrode sheet 111a being recessed toward the other surface of the electrode sheet 111a.

In addition, each depth d of the plurality of grooves 101 may be greater than a protruding length of the second pattern portion 12. This is to prevent the second pattern portion 12 from protruding further than the one surface 103 of the electrode sheet 111a.

The plurality of grooves 101 may be arranged at predetermined intervals p. The interval p may be a distance between centers of a pair of grooves 101 adjacent to each other among the plurality of grooves 101.

A width W of any one of the plurality of grooves 101 may be 20 µm or more and 50 µm or less. The interval (or pitch p) may be 40 µm or more and 100 µm or less, and the depth d of any one of the grooves 101 may be 1 µm or less.

Accordingly, a length of the second pattern portion 12 protruding from an inner surface of any one of the grooves 101 may be 1 µm or less.

More preferably, the second pattern portion 12 may protrude from a bottom surface of any one of the grooves 101.

Since a size of the first pattern portion 11 is greater than a size of the second pattern portion 12, structures of the first pattern portion 11 and the second pattern portion 12 may be referred to as forming a hierarchical structure.

Through this, an average surface roughness of the electrode sheet 111a in the stacking region SA may be greater than 0.2 µm. More specifically, the average surface roughness of the electrode sheet 111a in the stacking region SA may be 0.3 µm or more and 1 µm or less.

In addition, an average surface roughness of the second pattern portion 12 may be 0.3 µm or more and 0.5 µm or less. As the average surface roughness of the electrode sheet 111a in the stacking region SA increases, a surface area in the stacking region SA where the active material layer and the electrode sheet 111a contact each other increases, which may reduce resistance at an interface between the active material layer and the electrode sheet 111a and improve performance of the battery cell 100.

In addition, due to the hierarchical structure, the average surface roughness of the second pattern portion 12 may be different from the average surface roughness of the electrode sheet 111a in the stacking region SA. Through this, the first pattern portion 11 and the second pattern portion 12 may increase a surface area of the one surface 103 of the electrode sheet 111a.

FIG. 4 illustrates an example of an electrode current collector according to the present disclosure.

More specifically, FIG. 4 is a view of the electrode current collector 111 as seen along the Z direction. Accordingly, FIG. 4 illustrates the one surface 103 of the electrode sheet 111a.

Referring to FIG. 4, shapes of the plurality of grooves 101 may be respectively provided as polygonal or circular. Such a shape may be referred to as a dot pattern.

In addition, the plurality of grooves 101 provided as the polygonal or the circular may be arranged at predetermined intervals from each other. Also, an interval of the plurality of grooves 101 along an X direction may be the same as or different from an interval of the plurality of grooves 101 along a Y direction.

The second pattern portion 12 may be formed in each of the plurality of grooves 101.

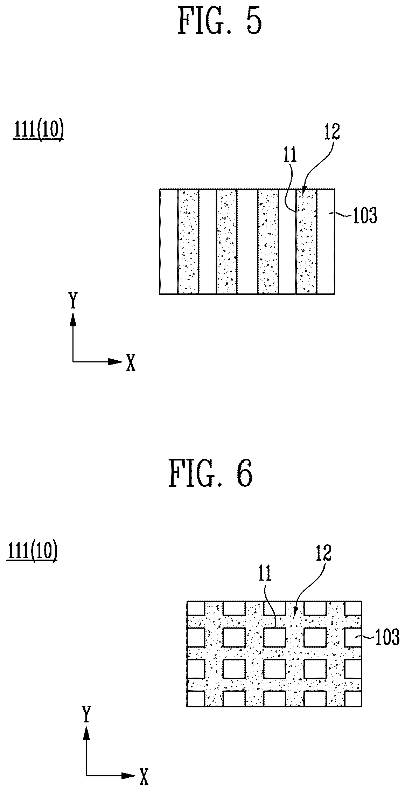

FIG. 5 illustrates another example of an electrode current collector according to the present disclosure.

More specifically, FIG. 5 is a view of the electrode current collector 111 as seen along the Z direction. Accordingly, FIG. 5 illustrates the one surface 103 of the electrode sheet 111a.

Referring to FIG. 5, the plurality of grooves 101 may respectively extend in a predetermined direction and may be arranged side by side along the intervals. Such a shape may be referred to as a line pattern. The intervals may be referred to as a pitch.

In addition, the second pattern portion 12 may be formed in each of the plurality of grooves 101.

FIG. 6 illustrates still another example of an electrode current collector according to the present disclosure.

More specifically, FIG. 6 is a view of the electrode current collector 111 as seen along the Z direction. Accordingly, FIG. 6 illustrates the one surface 103 of the electrode sheet 111a.

Referring to FIG. 6, the plurality of grooves 101 may extend in directions intersecting each other or in directions perpendicular to each other. Such a shape may be referred to as a mesh pattern.

Accordingly, the one surface 103 of the electrode sheet 111a may be a relief pattern separated from each other in a rectangular form.

Meanwhile, the first pattern portion 11 and the second pattern portion 12 illustrated in FIGS. 3 to 8 may be formed by surface treating (for example, etching) the one surface 103 of the electrode sheet 111a using a femtosecond laser.

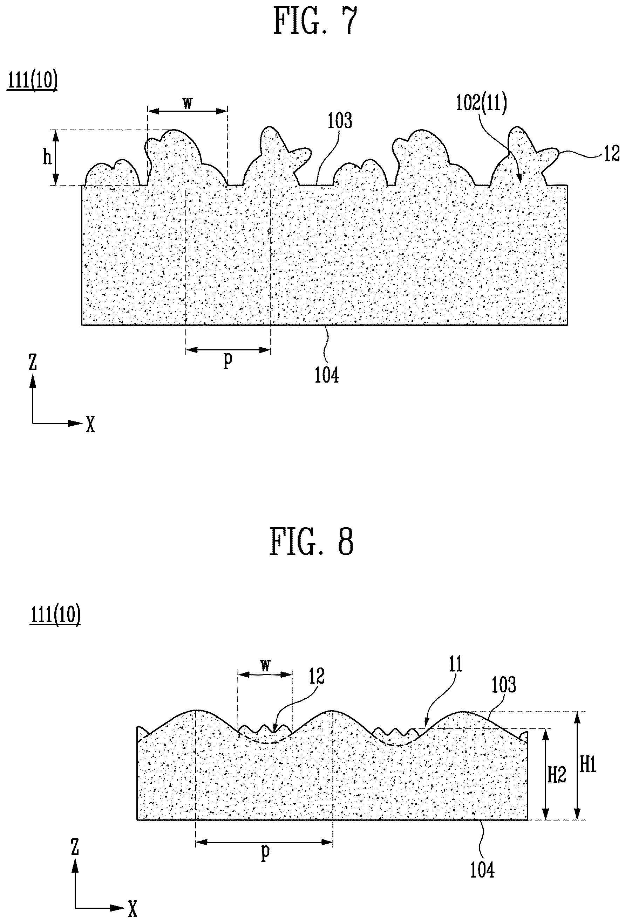

FIG. 7 is a cross-sectional view of still another example of an electrode current collector according to the present disclosure.

Unlike the fact that the first pattern portion 11 of FIG. 3 is a concave pattern, in FIG. 7 the first pattern portion 11 may be a convex pattern. In addition, referring to FIG. 7, although the second pattern portion 12 is illustrated as a convex pattern protruding from the first pattern portion 11, the second pattern portion 12 may alternatively be a concave pattern recessed from the first pattern portion 11.

The first pattern portion 11 may include a plurality of protrusions 102 formed to protrude from the one surface 103 of the electrode sheet 111a, and the second pattern portion 12 may protrude from the plurality of protrusions 102. This may be referred to as a hierarchical structure.

In addition, due to the hierarchical structure, a protruding length of any one of the plurality of protrusions 102 from the one surface 103 of the electrode sheet 111a may be greater than a length of the second pattern portion 12 protruding from the first pattern portion 11.

For example, each height h of the plurality of protrusions 102 relative to the one surface 103 of the electrode sheet 111a may be 0.2 µm to 0.4 µm. A width W, which is a length of a region along one direction in which each of the plurality of protrusions 102 protrudes from the electrode sheet 111a, may be 35 µm or less. In addition, a distance between centers of a pair of protrusions 102 adjacent to each other among the plurality of protrusions 102 may be 50 µm or less.

The protrusions 102 may also be formed on the other surface 104 of the electrode sheet 111a, and the active material layer may be stacked on both surfaces of the electrode sheet 111a.

FIG. 8 is a cross-sectional view of still another example of an electrode current collector according to the present disclosure.

The first pattern portion 11 may be provided such that the one surface 103 of the electrode sheet 111a has a wavy form, and the second pattern portion 12 may protrude from at least one valley 107 of the first pattern portion 11 such that a surface of the second pattern portion 12 has a wavy form.

That is, both the first pattern portion 11 and the second pattern portion 12 may have surfaces provided in a wavy form, but amplitudes of the waves and intervals (pitch p) between adjacent crests may be different.

In addition, a length of the second pattern portion 12 between the adjacent first pattern portions 11 may be referred to as a width W.

Referring to FIG. 8, a length H1 from the other surface 104 of the electrode sheet to any one crest 106 of the first pattern portion 11 may be greater than a length H2 to any one crest 106 of the second pattern portion 12.

**[Table 1]**

| | Width (*µ*m) | Pitch (*µ*m) | Overall average surface roughness | Average surface roughness inside the pattern | Adhesion force (N) |
|---|---|---|---|---|---|
| Comparative example | - | - | 0.2 *µ*m | - | 0.201 |
| Example 1 | 35 | 50 | 0.76 *µ*m | 0.32 *µ*m | 0.271 |
| Example 2 | 35 | 50 | 0.97 *µ*m | 0.45 *µ*m | 0.328 |

Table 1 summarizes a comparison between Comparative Example (a conventional electrode sheet 111a having no first pattern portion 11 and no second pattern portion 12) and Examples 1 and 2 (electrode sheets 111a in which both the first pattern portion 11 and the second pattern portion 12 have a wavy form).

Referring to Table 1, it can be seen that both the average surface roughness and the adhesion force in the stacking region of Examples 1 and 2 increase.

Table 2 below illustrates results of measuring adhesion force in the case of Example 1 while changing components of the active material layer.

**[Table 2]**

| | Electrode current collector | Negative electrode active material | Conductive material | CMC | SBR binder | Adhesion force (N) |
|---|---|---|---|---|---|---|
| Comparative example | Copper electrode sheet (no patterns) | 96.8 % | 0.5 % | 1.2 % | 1.5 % | 0.201 |
| Example 3-1 | Copper electrode sheet having the first pattern portion and the second pattern portion of Example 1 | 96.8 % | 0.5 % | 1.2 % | 1.5 % | 0.271 |
| Example 3-2 | | 97.1 % | 0.5 % | 1.2 % | 1.2 % | 0.206 |
| Example 3-3 | | 97.3 % | 0.5 % | 1.2 % | 1.0 % | 0.150 |
| Example 3-4 | | 97.7 % | 0.5 % | 1.2 % | 0.6 % | 0.115 |

Table 3 below illustrates results of measuring adhesion force in the case of Example 2 while changing components of the active material layer.

**[Table 3]**

| | electrode sheet | Negative electrode active material | Conductive material | CMC | SBR binder | Adhesion force (N) |
|---|---|---|---|---|---|---|
| Comparative example | Copper electrode sheet (no patterns) | 96.8 % | 0.5 % | 1.2 % | 1.5 % | 0.201 |
| Example 4-1 | Copper electrode sheet having the first pattern portion and the second pattern portion of Example 2 | 96.8 % | 0.5 % | 1.2 % | 1.5 % | 0.328 |
| Example 4-2 | | 97.3 % | 0.5 % | 1.2 % | 1.0 % | 0.202 |
| Example 4-3 | | 97.7 % | 0.5 % | 1.2 % | 0.6 % | 0.127 |

Referring to Table 1, the electrode 1 according to the present disclosure may include an electrode sheet 111a including an electrically conductive material; a first pattern portion 11 protruding or recessed in a predetermined stacking region SA among one surface 103 of the electrode sheet 111a; a second pattern portion 12 protruding or recessed from the first pattern portion 11; and an active material layer including a binder and an active material and being stacked in the stacking region SA, and an average roughness of the electrode sheet 111a in the stacking region SA may be greater than 0.2 µm.

In addition, referring to Table 2 and Table 3, a content of the binder based on a total weight of solids of the active material layer may be 1% or more and less than 1.5%.

That is, by surface-treating the electrode current collector 111 with a laser, the content of the binder based on the total weight of solids of the active material layer may be reduced by 0.2% to 0.5%, or the content of the binder may be reduced by 13% to 33% compared with the Comparative Example.

Meanwhile, Examples 3-1 to 3-4 and Examples 4-1 to 4-3 correspond to cases in which the electrode sheet 111a includes copper and the active material is a negative electrode active material.

Hereinafter, the embodiments of the present invention will be further described with reference to specific experimental examples. The Examples and Comparative Examples included in the experimental examples are merely illustrative of the present invention and are not intended to limit the appended claims. It should be apparent to those skilled in the art that various changes and modifications may be made to the embodiments within the scope of the present invention and its technical spirit, and it is also natural that such changes and modifications fall within the scope of the appended claims.

### Measurement of Average Surface Roughness

The average surface roughness was measured using a 3D microscope (or a 3D shape measurement device, a product of KEYENCE). That is, after positioning a lens of the 3D microscope at a measurement location of the electrode sheet 111a including the first pattern portion 11 or the second pattern portion 12, the average surface roughness was calculated by using whether the lens becomes focused or unfocused while moving upward and downward.

For example, by changing the measurement location and acquiring 3D shapes of the electrode sheet 111a, the average surface roughness of the electrode sheet 111a was calculated by using the acquired 3D shapes.

### Measurement of Adhesion Force

### 1. Comparative Example

The electrode current collector 111 was manufactured by coating and drying a negative electrode slurry prepared by mixing a negative electrode active material, a conductive material, and a binder on the copper electrode sheet 111a without surface treatment. In Tables 2 and 3, the content of the SBR binder is shown as a percentage based on a total weight of solids of the active material layer after drying.

### 2. Formation of Active Material Layer

The active material layer stacked on the electrode current collector 111 of the Examples was formed by applying the negative electrode slurry to one surface 103 of the electrode sheet 111a including copper, and then forming the layer using a blade coater. Thereafter, the electrode 1 was manufactured by drying at 120°C for about 5 minutes.

After drying, a thickness of the electrode 1 was 105 µm or more and 107 µm or less, and after pressing the electrode 1, the thickness was 90 µm. A peel strength tester (90° Peel Strength Tester) was used to measure adhesion force.

### 3. Adhesion Force Test

A peel strength tester (90° Peel Strength Tester) was used, which measures a load applied to a width of the one surface 103 of the electrode sheet 111a while peeling the active material layer from the electrode 1 at a constant speed.

### (1) Sample Preparation

A 3M translucent tape having a width of 18 mm was cut to a length of about 10 cm, and after folding 2 cm of an end of the tape, the tape was attached to the electrode 1. Thereafter, the tape and the electrode 1 were pressed using a roller.

### (2) Preparation of Peel Strength Tester

Double-sided tape was attached to a plate of the peel strength tester, and a measurement gauge value of the peel strength tester was zero-adjusted.

### (3) Fixing of Sample

A tape portion of the sample was attached to the double-sided tape on the plate, and a portion of the tape opposite to the sample was fixed perpendicularly at 90° to a jig of the peel strength tester.

### (4) Measurement of Adhesion Force

When measurement was started in the peel strength tester, the jig moved in a 45° direction to measure adhesion force.

It is understood by those skilled in the art that the plurality of exemplary embodiments described above are specific examples of the following aspects.

Aspect 1. An electrode current collector comprising: an electrode sheet including an electrically conductive material; a first pattern portion protruding or recessed in a stacking region provided on at least one surface of the electrode sheet; and a second pattern portion protruding or recessed from the first pattern portion; wherein an average surface roughness of the electrode sheet in the stacking region is greater than 0.2 µm.

Aspect 2. The electrode current collector of aspect 1, wherein the first pattern portion includes a plurality of grooves recessed from the one surface of the electrode sheet to form recessed spaces, and wherein the second pattern portion protrudes from each inner surface of the plurality of grooves.

Aspect 3. The electrode current collector of aspect 2, wherein each depth of the plurality of grooves is greater than a protruding length of the second pattern portion.

Aspect 4. The electrode current collector of aspect 2 or 3, wherein the plurality of grooves are arranged at predetermined intervals.

Aspect 5. The electrode current collector of aspect 4, wherein each of the plurality of grooves extends in a predetermined direction and is arranged side by side along the intervals.

Aspect 6. The electrode current collector of any one of the previous aspects, wherein the first pattern portion is provided such that the one surface of the electrode sheet has a wavy form, and wherein the second pattern portion protrudes from at least one valley of the first pattern portion, and a surface of the second pattern portion has a wavy form.

Aspect 7. The electrode current collector of aspect 6, wherein a length from the other surface of the electrode sheet to any crest of the first pattern portion is greater than a length to any crest of the second pattern portion.

Aspect 8. The electrode current collector of any one of aspects 2 to 5, wherein shapes of the plurality of grooves are respectively provided as polygonal or circular.

Aspect 9. The electrode current collector of aspect 8, wherein the plurality of grooves provided as the polygonal or the circular are arranged at predetermined intervals from each other.

Aspect 10. The electrode current collector of any one of the previous aspects, wherein the first pattern portion includes a plurality of protrusions formed to protrude from the one surface of the electrode sheet, and wherein the second pattern portion protrudes from the plurality of protrusions.

Aspect 11. The electrode current collector of aspect 10, wherein a protruding length of any one of the plurality of protrusions from the one surface of the electrode sheet is greater than a length of the second pattern portion protruding from the first pattern portion.

Aspect 12. The electrode current collector of any one of the previous aspects, wherein an average surface roughness of the second pattern portion is different from an average surface roughness of the electrode sheet in the stacking region.

Aspect 13. An electrode comprising: an electrode sheet including an electrically conductive material; a first pattern portion protruding or recessed in a stacking region provided on at least one surface of the electrode sheet; a second pattern portion protruding or recessed from the first pattern portion; and an active material layer including a binder and an active material and being stacked in the stacking region; wherein an average surface roughness of the electrode sheet in the stacking region is greater than 0.2 µm.

Aspect 14. The electrode of aspect 13, wherein a content of the binder based on a total weight of solids of the active material layer is 1% or more and less than 1.5%.

Aspect 15. The electrode of aspect 13 or 14, wherein the electrode sheet includes copper, and wherein the active material is a negative electrode active material.

The above description is merely an example to which principles of the present disclosure are applied, and other configurations may be further included within a scope not departing from the range of the present invention.

## Claims

1. An electrode current collector comprising:
an electrode sheet including an electrically conductive material;
a first pattern portion protruding or recessed in a stacking region provided on at least one surface of the electrode sheet; and
a second pattern portion protruding or recessed from the first pattern portion;
wherein an average surface roughness of the electrode sheet in the stacking region is greater than 0.2 µm.

2. The electrode current collector of claim 1, wherein the first pattern portion includes a plurality of grooves recessed from the one surface of the electrode sheet to form recessed spaces, and
wherein the second pattern portion protrudes from each inner surface of the plurality of grooves.

3. The electrode current collector of claim 2, wherein each depth of the plurality of grooves is greater than a protruding length of the second pattern portion.

4. The electrode current collector of claim 2 or 3, wherein the plurality of grooves are arranged at predetermined intervals.

5. The electrode current collector of claim 4, wherein each of the plurality of grooves extends in a predetermined direction and is arranged side by side along the intervals.

6. The electrode current collector of any one of the previous claims, wherein the first pattern portion is provided such that the one surface of the electrode sheet has a wavy form, and
wherein the second pattern portion protrudes from at least one valley of the first pattern portion, and a surface of the second pattern portion has a wavy form.

7. The electrode current collector of claim 6, wherein a length from the other surface of the electrode sheet to any crest of the first pattern portion is greater than a length to any crest of the second pattern portion.

8. The electrode current collector of any one of claims 2 to 5, wherein shapes of the plurality of grooves are respectively provided as polygonal or circular.

9. The electrode current collector of claim 8, wherein the plurality of grooves provided as the polygonal or the circular are arranged at predetermined intervals from each other.

10. The electrode current collector of any one of the previous claims, wherein the first pattern portion includes a plurality of protrusions formed to protrude from the one surface of the electrode sheet, and
wherein the second pattern portion protrudes from the plurality of protrusions.

11. The electrode current collector of claim 10, wherein a protruding length of any one of the plurality of protrusions from the one surface of the electrode sheet is greater than a length of the second pattern portion protruding from the first pattern portion.

12. The electrode current collector of any one of the previous claims, wherein an average surface roughness of the second pattern portion is different from an average surface roughness of the electrode sheet in the stacking region.

13. An electrode comprising:
an electrode sheet including an electrically conductive material;
a first pattern portion protruding or recessed in a stacking region provided on at least one surface of the electrode sheet;
a second pattern portion protruding or recessed from the first pattern portion; and
an active material layer including a binder and an active material and being stacked in the stacking region;
wherein an average surface roughness of the electrode sheet in the stacking region is greater than 0.2 µm.

14. The electrode of claim 13, wherein a content of the binder based on a total weight of solids of the active material layer is 1% or more and less than 1.5%.

15. The electrode of claim 13 or 14, wherein the electrode sheet includes copper, and
wherein the active material is a negative electrode active material.
